(19) **Europäisches Patentamt**
**European Patent Office**
**Office européen des brevets**

(11) **EP 4 073 540 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **20821157.3**

(22) Anmeldetag: **07.12.2020**

(51) Internationale Patentklassifikation (IPC):
*G01S 7/02* *(2006.01)*       *G01S 13/32* *(2006.01)*
*G01S 13/58* *(2006.01)*      *G01S 13/931* *(2020.01)*
*G01S 13/34* *(2006.01)*      *G01S 13/42* *(2006.01)*
*G01S 13/87* *(2006.01)*

(52) Gemeinsame Patentklassifikation (CPC):
**G01S 13/931; G01S 7/023; G01S 13/325;**
**G01S 13/343; G01S 13/42; G01S 13/584;**
**G01S 13/878;** G01S 7/356

(86) Internationale Anmeldenummer:
**PCT/EP2020/084807**

(87) Internationale Veröffentlichungsnummer:
**WO 2021/115986 (17.06.2021 Gazette 2021/24)**

(54) **VERFAHREN ZUR ERMITTLUNG VON WENIGSTENS EINER OBJEKTINFORMATION WENIGSTENS EINES OBJEKTES, DAS MIT EINEM RADARSYSTEM ERFASST WIRD UND RADARSYSTEM**

METHOD FOR DETERMINING AT LEAST ONE PIECE OF OBJECT INFORMATION ABOUT AT LEAST ONE OBJECT SENSED BY MEANS OF A RADAR SYSTEM AND RADAR SYSTEM

PROCÉDÉ DE DÉTERMINATION D'AU MOINS UN ÉLÉMENT D'INFORMATIONS D'OBJET CONCERNANT AU MOINS UN OBJET DÉTECTÉ AU MOYEN D'UN SYSTÈME RADAR ET SYSTÈME RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2019   DE 102019133977**

(43) Veröffentlichungstag der Anmeldung:
**19.10.2022   Patentblatt 2022/42**

(73) Patentinhaber: **Valeo Schalter und Sensoren GmbH**
**74321 Bietigheim-Bissingen (DE)**

(72) Erfinder:
• **STURM, Christian**
**74321 Bietigheim-Bissingen (DE)**
• **AFRASIABI VAYGHAN, Hamid**
**74321 Bietigheim-Bissingen (DE)**

(74) Vertreter: **Pothmann, Karsten**
**Valeo Schalter und Sensoren GmbH**
**CDA-IP**
**Laiernstraße 12**
**74321 Bietigheim-Bissingen (DE)**

(56) Entgegenhaltungen:
WO-A1-2017/179515       WO-A1-2018/137836
WO-A1-2019/146644       US-A1- 2020 355 789

## Beschreibung

### Technisches Gebiet

Die Erfindung wird durch die unabhängigen Ansprüche definiert.

Die Erfindung betrifft ein Verfahren zur Ermittlung von wenigstens einer Objektinformation wenigstens eines Objektes, das mit einem Radarsystem erfasst wird, bei dem

- mit wenigstens vier Sendern Sendesignale in Form von Chirps jeweils in Chirp-Sequenzen in einen Überwachungsbereich des Radarsystems gesendet werden,
- mit wenigstens einem Empfänger an dem wenigstens einen Objekt reflektierte Echos der Sendesignale als Empfangssignale empfangen und sofern erforderlich in eine für eine elektronische Steuer- und/oder Auswerteeinrichtung verwertbare Form gebracht werden,
- die Empfangssignale wenigstens einer zweidimensionalen diskreten Fourier-Transformation unterzogen werden,
- aus dem Ergebnis der wenigstens einen zweidimensionalen diskreten Fourier-Transformation wenigstens ein Zielsignal ermittelt wird,
- aus dem wenigstens einen Zielsignal wenigstens eine Objektinformation ermittelt wird,
- wobei auf der Senderseite aus einem frequenzmodulierten Dauerstrichsignal wenigstens ein erstes Sendesignal und wenigstens drei andere Sendesignale erzeugt und jeweils mit einem eigenen Sender gleichzeitig in den Überwachungsbereich des Radarsystems gesendet werden,
- wobei die wenigstens drei anderen Sendesignale jeweils mittels einer Phasenmodulation gegenüber dem wenigstens einen ersten Sendesignal codiert werden,
- wobei die jeweilige Phasenlagen der wenigstens drei anderen Sendesignale von einem Chirp zum nächsten jeweils um einen jeweiligen konstanten Phasenverschiebungsbetrag inkrementiert oder dekrementiert werden,
- wobei für die wenigstens drei anderen Sendesignale unterschiedliche Phasenverschiebungsbeträge verwendet werden, und wobei die jeweiligen Phasenverschiebungsbeträge für die wenigstens drei anderen Sendesignale so vorgegeben werden, dass für wenigstens vier der Sendesignale inklusive des wenigstens einen ersten Sendesignals die betragsmäßigen Differenzen zwischen den Phasenverschiebungsbeträgen von jeweils zwei der wenigstens vier Sendesignale unterschiedlich sind. Ferner betrifft die Erfindung ein Radarsystem zur Ermittlung von wenigstens einer Objektinformation wenigstens eines Objektes,
- mit wenigstens vier Sendern zum Senden von Sendesignalen in Form von Chirps in Chirp-Sequenzen in einen Überwachungsbereich,
- mit wenigstens einem Empfänger zum Empfangen von an dem wenigstens einen Objekt reflektierten Echos der Sendesignale als Empfangssignale und
- mit wenigstens einer Steuer- und/oder Auswerteeinrichtung zur Steuerung der wenigstens vier Sender und des wenigstens einen Empfängers und zur Auswertung der Empfangssignale.

### Stand der Technik

Aus der WO 2018/137836 ist ein Verfahren zur Ermittlung von wenigstens einer Objektinformation wenigstens eines Objektes, das mit einem Radarsystem insbesondere eines Fahrzeugs erfasst wird, bekannt. Bei dem Verfahren werden mit wenigstens einem Sender Sendesignale in einen Überwachungsbereich des Radarsystems gesendet. Mit wenigstens einem Empfänger werden an dem wenigstens einen Objekt reflektierte Echos der Sendesignale als Empfangssignale empfangen und sofern erforderlich in eine für eine elektronische Steuer- und/oder Auswerteeinrichtung verwertbare Form gebracht. Die Empfangssignale werden wenigstens einer zweidimensionalen diskreten Fourier-Transformation unterzogen. Aus dem Ergebnis der wenigstens einen zweidimensionalen diskreten Fourier-Transformation wird wenigstens ein Zielsignal ermittelt. Aus dem wenigstens einen Zielsignal wird wenigstens eine Objektinformation ermittelt. Auf der Senderseite werden aus einem frequenzmodulierten Dauerstrichsignal wenigstens ein erstes Sendesignal und wenigstens ein zweites Sendesignal erzeugt, wobei das wenigstens eine zweite Sendesignal mittels einer Phasenmodulation gegenüber dem wenigstens einen ersten Sendesignal codiert wird, wobei die Phasenlage des wenigstens einen zweiten Sendesignals von einer Frequenzrampe zur nächsten jeweils um einen konstanten Betrag inkrementiert oder dekrementiert wird. Bei der Phasenmodulation von mehreren zweiten Sendesignalen können unterschiedliche Phaseninkremente für die jeweiligen zweiten Sendesignale verwendet werden. Das wenigstens eine erste Sendesignal wird mit wenigstens einem ersten Sender und das wenigstens eine zweite Sendesignal wird mit wenigstens einem zweiten Sender gleichzeitig in den Überwachungsbereich des Radarsystems gesendet. Mit der Steuer- und Auswerteeinrichtung können die Sender so angesteuert werden, dass mit dem ersten Sender das erste Sendesignal, dem zweiten Sender das zweite Sendesignal und einem dritten Sender ein drittes Sendesignal gleichzeitig in den Überwachungsbereich gesendet werden.

Der Erfindung liegt die Aufgabe zugrunde, ein Verfahren und ein Radarsystem der eingangs genannten Art zu gestalten, bei denen etwaige Mehrdeutigkeiten in Bezug auf Objektinformationen, insbesondere Abstand, Geschwindigkeit und/oder Richtung des wenigstens einen Objektes relativ zum Radarsystem, einfacher und/oder zuverlässiger aufgelöst werden können.

## Offenbarung der Erfindung

Diese Aufgabe wird erfindungsgemäß dadurch gelöst, dass die jeweiligen Phasenverschiebungsbeträge für die wenigstens drei anderen Sendesignale so vorgegeben werden, dass für wenigstens vier der Sendesignale inklusive des wenigstens einen ersten Sendesignals die betragsmäßigen Differenzen zwischen den Phasenverschiebungsbeträgen von jeweils drei der wenigstens vier Sendesignale unterschiedlich sind.

Erfindungsgemäß wird wenigstens ein Zielsignal einem entsprechenden Sendesignal zugeordnet und so validiert. Durch die erfindungsgemäße Phasenmodulation der Sendesignale werden die entsprechenden von den verschiedenen Sendern resultierenden Zielsignale, insbesondere in der Doppler-Dimension betrachtet, gegeneinander verschoben und bilden so ein eindeutiges Gesamtmuster. Je nach Anzahl der verfügbaren Modulationsstufen der Phasenmodulation können damit auch deutlich mehr als vier Sender gleichzeitig eingesetzt werden. Die Sendesignale sind dabei am Ausgang der zweidimensionalen Fourier-Transformation, insbesondere FFT, vollständig orthogonal. Das Verfahren lässt sich unter Nutzung höherstufiger Modulationsverfahren auf entsprechend viele gleichzeitig aktive Sender erweitern.

Mit der Erfindung kann ein MIMO-Radar mit Fast-Chirp-Signalen realisiert werden. Das MIMO-Radar kann nach einem Doppler-Multiplex-Verfahren betrieben werden. Mithilfe der unterschiedlichen konstanten Inkrementierung der Phasenlagen der Sendesignale an den einzelnen Sendern können Signale generiert werden, die nach der auf der Empfängerseite durchgeführten zweidimensionalen diskreten Fourier-Transformation entlang der Dopplerdimension verschoben und somit orthogonal sind.

Als Chirp wird bekanntermaßen ein Signal bezeichnet dessen Frequenz sich zeitlich ändert. Der Frequenzverlauf eines Chirps kann als Frequenzrampe dargestellt werden.

Erfindungsgemäß werden die jeweiligen Phasenverschiebungsbeträge für die wenigstens drei anderen Sendesignale so vorgegeben, dass für wenigstens vier der Sendesignale inklusive des wenigstens einen ersten Sendesignals die betragsmäßigen Differenzen zwischen den Phasenverschiebungsbeträgen von jeweils zwei der wenigstens vier

Sendesignale unterschiedlich sind. Auf diese Weise wird das Auftreten von Interferenzen zwischen Zielsignalen, welche von unterschiedlichen Zielen mit unterschiedlichen Geschwindigkeit in derselben Entfernung, insbesondere in einer Entfernungs-Doppler-Zelle mit demselben Entfernungswert, auftreten können, verringert. Eine Interferenz zwischen zwei Zielsignalen von Zielen mit unterschiedlichen Geschwindigkeit in derselben Entfernungszelle kann potenziell ohne die Erfindung dann auftreten, wenn sich deren Geschwindigkeiten genau um ein ganzzahliges Vielfaches eines gewählten Abstands der Sender in der Dopplerdimension unterscheiden. Mithilfe der Erfindung können auch bei mehreren Zielen unter Verwendung einer Mehrzahl von Sendern Interferenzen zwischen Zielsignalen von mehreren Zielen mit unterschiedlichen Geschwindigkeiten vermieden werden.

Erfindungsgemäß werden auf der Empfängerseite nach der Fourier-Transformation in in einer Entfernungs-Doppler-Matrix für die unterschiedlichen Sender unterschiedliche Doppler-Offset infolge der unterschiedlichen Phasenverschiebungsbeträge auf der Senderseite realisiert. Das Doppler-Offset für einen Sender ergibt sich als individueller Bruchteil des Eindeutigkeitsbereichs in der Dopplerdimension. Der Eindeutigkeitsbereich kann in der Entfernungs-Doppler-Matrix durch eine vorgegebene Anzahl von Entfernungs-Doppler-Zellen in der Dopplerdimension charakterisiert werden. Entsprechend kann der Eindeutigkeitsbereich auf der Senderseite einer Phasenverschiebung von 360° entsprechen. Die Phasenverschiebungsbeträge der unterschiedlichen Sender können jeweils als individueller Bruchteil von 360° angegeben werden.

Vorteilhafterweise kann das wenigstens eine zweite Sendesignal mittels einer Phasenmodulation gegenüber dem wenigstens einen ersten Sendesignal so codiert werden, dass eine zumindest temporäre signaltechnische Orthogonalität zwischen den Sendesignalen erzielt wird.

Die wenigstens vier Sender sind gleichzeitig aktiv. Auf diese Weise kann die Ermittlung der Objektinformationen beschleunigt werden.

Dadurch, dass bei der Phasenmodulation der wenigstens drei anderen Sendesignale unterschiedliche Phasenverschiebungsbeträge verwendet werden, können die wenigstens drei anderen Sendesignale untereinander und zu dem wenigstens einen ersten Sendesignal orthogonal realisiert werden.

Die reflektierten Echos werden auf der Empfängerseite als Empfangssignale empfangen und sofern erforderlich in eine für eine elektronische Steuer- und/oder Auswerteeinrichtung verwertbare Form gebracht. Sofern die Sendesignale und die resultierenden Echos eine Signalart aufweisen, welche nicht direkt mit der entsprechenden elektronischen Steuer- und/oder Auswerteeinrichtung verarbeitet werden kann, werden die Empfangssignale in eine elektronisch verwertbare Form gebracht. Andernfalls ist keine entsprechende Anpassung, insbesondere Umwandlung, der Empfangssignale erforderlich. Auf diese Weise können die Empfangssignale mittels der elektronischen Steuer- und/oder Auswerteeinrichtung direkt oder gegebenenfalls nach entsprechender Anpassung verarbeitet werden.

Das Verfahren kann vorteilhafterweise mit wenigstens einem Mittel auf softwaremäßigem und/oder hardwaremäßigem Wege insbesondere mithilfe einer Steuer- und/oder Auswerteeinrichtung realisiert werden.

Vorteilhafterweise kann das Radarsystem eine schnelle Frequenzmodulation nutzen. Dabei werden hintereinander mehrere Chirps als Sequenzen ausgesendet.

Vorteilhafterweise kann die Phasenmodulation im Takt der Chirps (Chirp-Takt) erfolgen. Auf diese Weise kann eine erforderliche Frequenz der Codesequenz und damit eine erforderliche Signalbandbreite entsprechend gering gehalten werden.

Aus dem Ergebnis der wenigstens einen zweidimensionalen diskreten Fourier-Transformation kann eine Mehrzahl von Zielsignalen ermittelt werden, deren Anzahl pro physikalisch vorhandenen Ziel höchstens der Gesamtzahl der ersten und drei anderen Sendesignale entspricht. Dabei kann ein physikalisch vorhandenes Ziel Teil eines erfassten Objekts sein. Zielsignale können auch als Radarziele bezeichnet werden.

Die Erfindung kann bei einem Radarsystem eines Fahrzeugs, insbesondere einem Kraftfahrzeug, verwendet werden. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch bei Radarsystemen im stationären Betrieb eingesetzt werden.

Das Radarsystem kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem und/oder einer Gestenerkennung oder dergleichen, verbunden oder Teil einer solchen sein. Auf diese Weise kann das Fahrzeug autonom oder teilautonom betrieben werden.

Mit dem Radarsystem können stehende oder bewegte Objekte, insbesondere Fahrzeuge, Personen, Tiere, Pflanzen, Hindernisse, Fahrbahnunebenheiten, insbesondere Schlaglöcher oder Steine, Fahrbahnbegrenzungen, Verkehrszeichen, Freiräume, insbesondere Parklücken, Niederschlag oder dergleichen, erfasst werden.

Bei einer vorteilhaften Ausgestaltung des Verfahrens kann die Phasenlage des wenigstens einen ersten Sendesignals von einem Chirp zum nächsten konstant gehalten werden und ein entsprechender Phasenverschiebungsbetrag gleich null verwendet werden. Auf diese Weise kann aus Zielsignalen, welche dem wenigstens einen ersten Sendesignal zugeordnet werden können, direkt Objektinformationen abgeleitet werden.

Bei einer weiteren vorteilhaften Ausgestaltung des Verfahrens können die wenigstens drei anderen Sendesignale so codiert werden, dass von allen Sendesignalen inklusive des wenigstens einen ersten Sendesignals die betragsmäßigen Differenzen zwischen den Phasenverschiebungsbeträgen von jeweils zwei der wenigstens vier Sendesignale unterschiedlich sind. Auf diese Weise kann die Anzahl von interferierenden Zielsignalen weiter verringert werden.

Bei einer weiteren vorteilhaften Ausgestaltung des Verfahrens können die Phasenverschiebungsbeträge der Sendesignale so vorgegeben werden, dass es unter den Phasenverschiebungsbeträgen keine zwei Phasenverschiebungsbeträge gibt, bei denen die betragsmäßige Differenz der betragsmäßigen Differenz wenigstens eines der zwei Phasenverschiebungsbeträge zu einem Phasenverschiebungsbetrag eines anderen Sendesignals entspricht. Auf diese Weise kann die Anzahl von interferierenden Zielsignalen minimiert werden.

Bei einer weiteren vorteilhaften Ausgestaltung des Verfahrens kann ein Phasenverschiebungsbetrag wenigstens eines der wenigstens drei anderen Sendesignale als mathematisches Produkt eines Phasenverschiebungsgrundbetrags mit einer dem besagten Sendesignal zugeordneten Golomb-Zahl eines Golomb-Lineals vorgegeben werden. Auf diese Weise kann ein Aufwand zur Ermittlung von geeigneten Phasenverschiebungsbeträgen verringert werden.

Ein Golomb-Lineal ist bekanntermaßen in der Zahlentheorie ein Lineal, bei dem es keine zwei Markierungen an ganzzahligen Positionen mit dem gleichen Abstand zueinander gibt. Golomb-Lineale werden anhand ihrer Ordnung und ihrer Länge kategorisiert. Die Ordnung eines Golomb-Lineals ist dabei definiert durch die Anzahl der Markierungen, die Länge durch den größten Abstand zweier Markierungen.

Der Vorteil der unregelmäßigen Anordnung der Zielsignale in der Dopplerdimension wächst mit der Anzahl der simultan genutzten Sender. Bei einer größeren Anzahl an Sendern wird die Struktur des Golomb-Lineals deutlich komplexer. Bis zu der maximalen Ordnung von verfügbaren Golomb-Linealen existiert mindestens ein entsprechend geeignetes Golomb-Lineal für eine beliebige Ordnung und damit eine entsprechende Anzahl von Sendern.

Bei einem hochauflösenden Radarsystemen (HD-Radar) mit mehreren simultan aktiven Sendern wird mithilfe der Erfindung für alle möglichen Konstellationen aus mehreren Zielen die Überlappung von Zielsignalen minimiert. Ein Großteil der Zielsignale bleibt ungestört. Auf diese Weise kann die Interferenz von mehreren Zielsignalen zuverlässig auf ein Minimum reduziert werden.

Bei einem HD-Radar kann eine Vielzahl von Sendern, insbesondere mehr als 12 Sender, jeweilige Sendesignale aussenden. Eine Vielzahl, insbesondere 128 oder 256, von Entfernungs-Doppler-Zellen in der Dopplerdimension kann den Eindeutigkeitsbereich der Dopplerdimension definieren. Ohne das erfindungsgemäße Verfahren ist die Anzahl von möglichen Interferenzen von Zielsignalen, umso größer, mehr Sender simultan genutzt werden. Beispielsweise bei der Verwendung von 12 simultan aktiven Sendern überlappen sich ohne die Erfindung bis zu 11 der 12 Sendesignale in der Entfernungs-Doppler-Matrix. Mit dem erfindungsgemäßen Verfahren überlappt sich maximal jeweils ein Sendesignal in der Entfernungs-Doppler-Matrix. Die restlichen 11 Sendesignale bleiben ungestört.

Vorteilhafterweise kann der kleinste Phasenverschiebungsbetrag kleiner vorgegeben werden als der Eindeutigkeitsbereich für die Phasenverschiebung geteilt durch die Länge des Golomb-Lineals. Die Länge des Golomb-Lineals ist der größte Abstand zwischen zwei Markierungen. Vorteilhafterweise kann der kleinstmögliche Schritt für die Phasenverschiebung als 360°/Q vorgegeben werden, wobei Q eine Zweierpotenz ist. Auf diese Weise passen alle Zielsignale in eine entsprechende Entfernungs-Doppler-Matrix mit dem entsprechenden Eindeutigkeitsbereich der Dopplerdimension.

Bei einer weiteren vorteilhaften Ausgestaltung des Verfahrens kann das Golomb-Lineal verwendet werden, dessen Ordnung kleiner oder gleich ist der Anzahl der Sendesignale inklusive des wenigstens einen ersten Sendesignals, welchen unterschiedliche Phasenverschiebungsbeträge zugeordnet werden sollen. Entspricht die Ordnung des Golomb-Lineals der Anzahl der Sendesignale, so kann die Anzahl von möglichen Interferenzen von mehreren Zielsignalen auf der Empfängerseite minimiert werden.

Ist die Ordnung des Golomb-Lineals kleiner als die Anzahl der Sendesignale, kann das Golomb-Lineal auch dann verwendet werden, wenn die Anzahl der Sendesignale größer ist als die größte aktuell verfügbare Ordnung für Golomb-Lineale.

Die größte derzeit bekannte Golomb-Lineal hat die Ordnung 27. Es wird erwartet, dass in Zukunft Golomb-Lineale mit der Ordnung größer als 27 ermittelt werden. Auf diese Weise wird in der Zukunft für eine immer größere Anzahl Sendern, die eine immer größere Anzahl von Sendesignalen simultan senden können, die erfindungsgemäße Bestimmung von Phasenverschiebungsbeträgen mithilfe von Golomb-Linealen möglich werden.

Bei einer vorteilhaften Ausgestaltung des Verfahrens kann auf der Empfängerseite aus dem Ergebnis der wenigstens einen zweidimensionalen diskreten Fourier-Transformation eine Mehrzahl von Zielsignalen in einer Entfernungs-Doppler-Matrix ermittelt werden.

Vorteilhafterweise kann die Anzahl der Zielsignale pro physikalisch vorhandenem Ziel höchstens der Gesamtzahl der ersten und anderen Sendesignale in einem Takt der Chirp-Sequenz entsprechen.

Bei einer weiteren vorteilhaften Ausführungsform kann auf der Empfängerseite für jede Entfernungs-Doppler-Zelle aus der Entfernungs-Doppler-Matrix ein jeweiliges Leistungsfenster ermittelt werden, aus den Leistungsfenstern kann eine Leistungsfenster-Matrix ermittelt werden und mithilfe der Leistungsfenster-Matrix kann eine Mehrzahl von Zielsignalen jeweiligen Sendesignalen zuordnet werden. Auf diese Weise können die Zielsignale validiert werden.

Für eine Entfernungs-Doppler-Zelle kann das entsprechende Leistungsfenster PW nach folgender Formel ermittelt werden:

$$PW[r][d] = \sum_{m=0}^{GR\_Order-1} SPEC(r)[mod(GR\_Marks[m] + d, D)]$$

Dabei ist GR_Marks die Golomb-Zahl eines Golomb-Lineals mit der Ordnung GR_Order. Die Ordnung GR_Order entspricht der Anzahl der verwendeten Sender beziehungsweise der Anzahl der unterschiedlichen Sendesignale. Die Entfernungswerte r der Entfernungs-Doppler-Zellen sind aus dem Bereich [0; R], wobei R die Anzahl der Entfernungs-Doppler-Zellen der Entfernungs-Doppler-Matrix in der Entfernungsdimension ist. Die Dopplerwerte d für die Entfernungs-Doppler-Zellen in der Dopplerdimension sind aus dem Bereich [0; D], wobei D die Anzahl der Entfernungs-Doppler-Zellen der Entfernungs-Doppler-Matrix in der Dopplerdimension ist.

Mit den folgenden Gleichungen können aus der ursprünglichen zweidimensionalen Fourier-Transformation die korrekten komplexen Werte den entsprechenden Sendern zugewiesen werden:

$$\text{2D-FFT}_{TX1} = \text{2D-FFT} [D_m + GR\_Marks[0]]$$

$$\text{2D-FFT}_{TX2} = \text{2D-FFT} [D_m + GR\_Marks[1]]$$

...

$$\text{2D-FFT}_{TXN} = \text{2D-FFT} [D_m + GR\_Marks[N-1]]$$

Dabei ist N die Anzahl der Sender. TX1 bis TXN sind die Bezeichnungen für die Sender. $R_m$ ist der Index für die Zelle für ein erfasstes Ziel in der Leistungsmatrix in der Entfernungsdimension. $D_m$ ist der Index für die Zelle für ein erfasstes Ziel in der Leistungsmatrix in der Dopplerdimension.

Optional kann eine zusätzliche Überprüfung in der gleichen Zelle $R_m$ in der Entfernungsdimension durchgeführt werden, wenn es andere benachbarte Detektionen zu der Zelle $D_m$ in der Dopplerdimension gibt, die in der Entfernungs-Doppler-Matrix kollidierende Peaks haben. Für die Suche können die Detektionen in Zellen in der Dopplerdimension im Bereich [mod($D_m$+GR_length, D), mod($D_m$-GR_length, D)] überprüft werden. Falls eine Detektion in diesem Bereich vorliegt, kann eine weitere Überprüfung durchgeführt werden, um mögliche Kollisionen in der Entfernungs-Doppler-Matrix zu finden. Diese kollidierenden Zellen in der Dopplerdimension können markiert werden und diese Information kann für die Signalverarbeitung des MIMO-Radars genutzt werden.

Bei einer weiteren vorteilhaften Ausgestaltung des Verfahrens kann aus wenigstens einem Zielsignal wenigstens eine Objektinformation ermittelt werden. Auf diese Weise kann mithilfe der Objektinformationen der Überwachungsbereich beschrieben werden.

Vorteilhafterweise kann aus wenigstens einem validierten Zielsignal wenigstens eine Objektinformation ermittelt werden. Validierte Zielsignale sind Zielsignale, die einem Sendesignal eindeutig zugeordnet werden können.

Bei einer weiteren vorteilhaften Ausgestaltung des Verfahrens kann aus wenigstens einem Zielsignal wenigstens eine Objektinformation in Form einer Geschwindigkeit und/oder einer Position, insbesondere ein Abstand und/oder eine Richtung, des wenigstens einen Objektes relativ zu dem Radarsystem ermittelt werden. Auf diese Weise können mit dem Radarsystem Informationen über das wenigstens eine Objekt gewonnen werden, welche insbesondere zur Steuerung von Fahrfunktionen eines Fahrzeugs von Nutzen sind.

Bei einer weiteren vorteilhaften Ausgestaltung des Verfahrens kann eine einzige zweidimensionale diskrete Fourier-Transformation, insbesondere eine einzige zweidimensionale schnelle Fourier-Transformation, ausgeführt werden. Auf diese Weise können mit nur einer einzigen zweidimensionalen insbesondere schnellen Fourier-Transformation Informationen sowohl aus dem wenigstens einen ersten Sendesignal als auch aus den wenigstens drei anderen Sendesignalen verwertet werden. So kann das Verfahren effizienter ausgeführt werden.

Bei einer weiteren vorteilhaften Ausgestaltung des Verfahrens können die wenigstens drei anderen Sendesignale auf der Senderseite mittels einer binären oder höherstufigen Phasenumtastung codiert werden. Auf diese Weise kann eine signaltechnische Orthogonalität zwischen den Sendesignalen erzielt werden.

Vorteilhafterweise kann die Codierung der wenigstens drei anderen Sendesignale im Takt der Chirp-Sequenzen erfolgen. Auf diese Weise können die aufeinander folgenden Chirps mit linearen Frequenzrampen wahlweise mit den entsprechenden Phasenlagen ausgesendet werden. So können die Phasen derart umgetastet werden, dass die Sendesignale bei den Empfängern über die gesamte Sequenzdauer betrachtet orthogonal sind.

Bei einer weiteren vorteilhaften Ausgestaltung des Verfahrens kann das Verfahren mehrmals hintereinander, insbesondere zyklisch, durchgeführt werden. Auf diese Weise kann der Überwachungsbereich über einen längeren Zeitraum überwacht werden. Zusätzlich oder alternativ können die Ergebnisse der einzelnen Messzyklen miteinander verglichen werden und somit eine Validierung der Zielsignale verbessert und Mehrdeutigkeiten besser aufgelöst werden.

Vorteilhafterweise kann wenigstens ein Zielsignal über mehrere Messzyklen validiert werden. Ein derartiges Verfahren kann als "Tracking" bezeichnet werden.

Ferner wird die technische Aufgabe erfindungsgemäß bei dem Radarsystem dadurch gelöst, dass die wenigstens eine Steuer- und/oder Auswerteeinrichtung Mittel aufweist zur Durchführung des erfindungsgemäßen Verfahrens.

Vorteilhafterweise können die Mittel der Steuer- und/oder Auswerteeinrichtung auf softwaremäßigem und/oder hardwaremäßigem Wege realisiert sein.

Im Übrigen gelten die im Zusammenhang mit dem erfindungsgemäßen Verfahren und dem erfindungsgemäßen Radarsystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

**Kurze Beschreibung der Zeichnungen**

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch

Figur 1 ein Kraftfahrzeug mit einem Fahrerassistenzsystem und einem MIMO-Radarsystem zu Überwachung eines Überwachungsbereichs in Fahrtrichtung vor dem Kraftfahrzeug, wobei das Radarsystem beispielhaft vier Sender und zwei Empfänger aufweist;

Figur 2    eine Funktionsdarstellung des Kraftfahrzeugs mit dem Radarsystem und dem Fahrerassistenzsystem aus der Figur 1;

Figur 3    ein Amplituden-Zeit-Diagramm eines ersten Sendesignals in Form eines Chirps, welches mit einem ersten Sender des Radarsystems aus den Figuren 1 und 2 gesendet wird;

Figur 4    ein Amplituden-Zeit-Diagramm einer Chirp-Sequenz aus Chirps des ersten Sendesignals, welche mit dem ersten Sender des Radarsystems aus den Figuren 1 und 3 gesendet wird;

Figur 5    ein Frequenz-Zeit-Diagramm der Chirp-Sequenz aus der Figur 4;

Figur 6    eine Entfernungs-Doppler-Matrix mit Zielsignalen, welche aus Empfangssignalen von jeweiligen Chirp-Sequenzen, welche mit den vier Sendern des Radarsystems aus den Figuren 1 und 2 gesendet und an einem Ziel reflektiert werden, ermittelt werden, wobei das erfasste Ziel keine Relativgeschwindigkeit gegenüber dem Radarsystem besitzt;

Figur 7    die Entfernungs-Doppler-Matrix aus der Figur 6, wobei hier zusätzlich Zielsignale von einem zweiten Ziel gezeigt sind, welches eine Relativgeschwindigkeit gegenüber dem Radarsystem besitzt.

In den Figuren sind gleiche Bauteile mit gleichen Bezugszeichen versehen.

**Ausführungsform(en) der Erfindung**

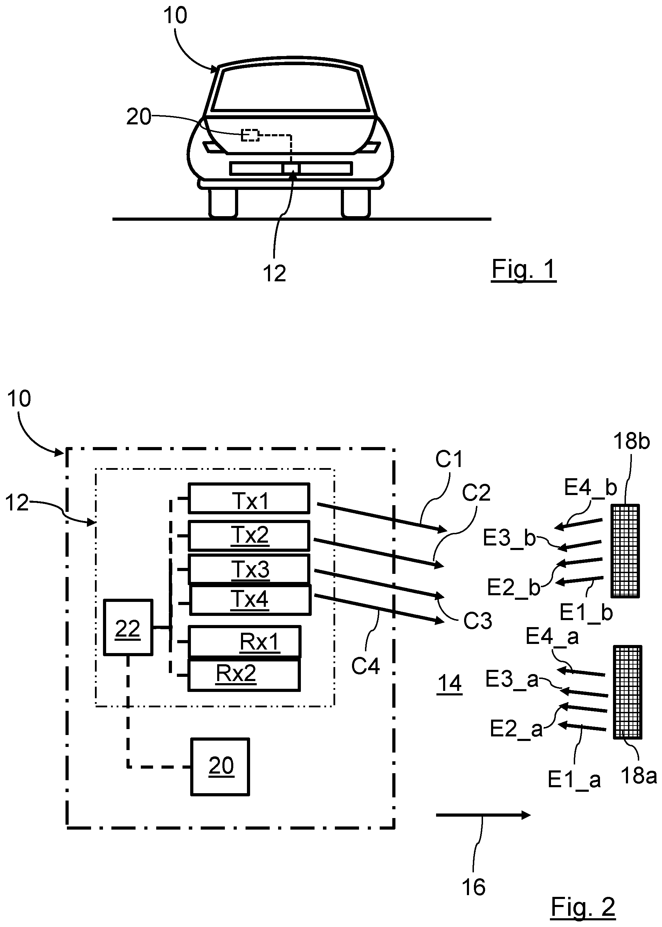

In der Figur 1 ist ein Kraftfahrzeug 10 in Form eines Personenkraftwagens in der Vorderansicht gezeigt. Das Kraftfahrzeug 10 verfügt über ein Radarsystem 12. Das Radarsystem 12 ist beispielhaft in der vorderen Stoßstange des Kraftfahrzeugs 10 angeordnet. Mit dem Radarsystem 12 kann ein in dem Funktionsschaubild der Figur 2 angedeuteter Überwachungsbereich 14 in Fahrtrichtung 16 vor dem Kraftfahrzeug 10 auf Objekte hin überwacht werden. In der Figur 2 sind zwei Objekte 18a und 18b angedeutet.

Das Radarsystem 12 kann auch an anderer Stelle am Kraftfahrzeug 10 angeordnet und anders ausgerichtet sein. Bei den Objekten 18a und 18b kann es sich um stehende oder bewegte Objekte, beispielsweise um andere Fahrzeuge, Personen, Tiere, Pflanzen, Hindernisse, Fahrbahnunebenheiten, beispielsweise Schlaglöcher oder Steine, Fahrbahnbegrenzungen, Verkehrszeichen, Freiräume, Beispielweise Parklücken, Niederschlag oder dergleichen handeln.

Das Radarsystem 12 ist als frequenzmoduliertes Dauerstrichradar ausgestaltet. Frequenzmodulierte Dauerstrichradare werden in Fachkreisen auch als FMCW (Frequency modulated continuous wave) Radare bezeichnet. Mit dem Radarsystem 12 kann beispielsweise eine jeweilige Entfernung, eine jeweilige Richtung und eine jeweilige Geschwindigkeit der Objekte 18a und 18b relativ zum Kraftfahrzeug 10 ermittelt werden.

Das Radarsystem 12 ist mit einem Fahrerassistenzsystem 20 verbunden. Mit dem Fahrerassistenzsystem 20 kann das Kraftfahrzeug 10 autonom oder teilautonom betrieben werden.

Das Radarsystem 12 ist als sogenanntes MIMO-Radarsystem ausgestaltet. Das Radarsystem 12 umfasst beispielhaft einen ersten Sender Tx1, einen zweiten Sender Tx2, einen dritten Sender Tx3, einen vierten Sender Tx4, eine elektronische Steuer- und Auswerteeinrichtung 22, einen ersten Empfänger Rx1 und einen zweiten Empfänger Rx2. Die Sender Tx1, Tx2, Tx3 und Tx4 sind beispielhaft mit einem Radarsensor realisiert, der beispielsweise einen Chip mit den vier integrierten Sendern Tx1, Tx2, Tx3 und Tx4 enthält. Die Sender Tx1, Tx2, Tx3 und Tx4 sind jeweils mit einer separaten Sendeantenne verbunden. Beispielhaft sind die - hier vier - Sendeantennen im Abstand von wenigen Millimetern angeordnet.

Die Steuer- und Auswerteeinrichtung 22 ist signaltechnisch mit dem Fahrassistenzsystem 20 verbunden. Mit dem Fahrerassistenzsystem 20 können abhängig von Objektinformationen des Radarsystems 12 Funktionen des Kraftfahrzeugs 10 gesteuert/geregelt werden. Für die Erfindung ist es nicht wesentlich, ob elektrische Steuer- und/oder Auswertevorrichtungen, wie beispielsweise die das Fahrerassistenzsystem 20, die Steuer- und Auswerteeinrichtung 22, ein Motorsteuergerät des Kraftfahrzeugs 10 oder dergleichen, in einem oder mehreren Bauteilen oder Bauteilgruppen integriert oder wenigstens teilweise als dezentrale Bauteile oder Bauteilgruppen realisiert sind.

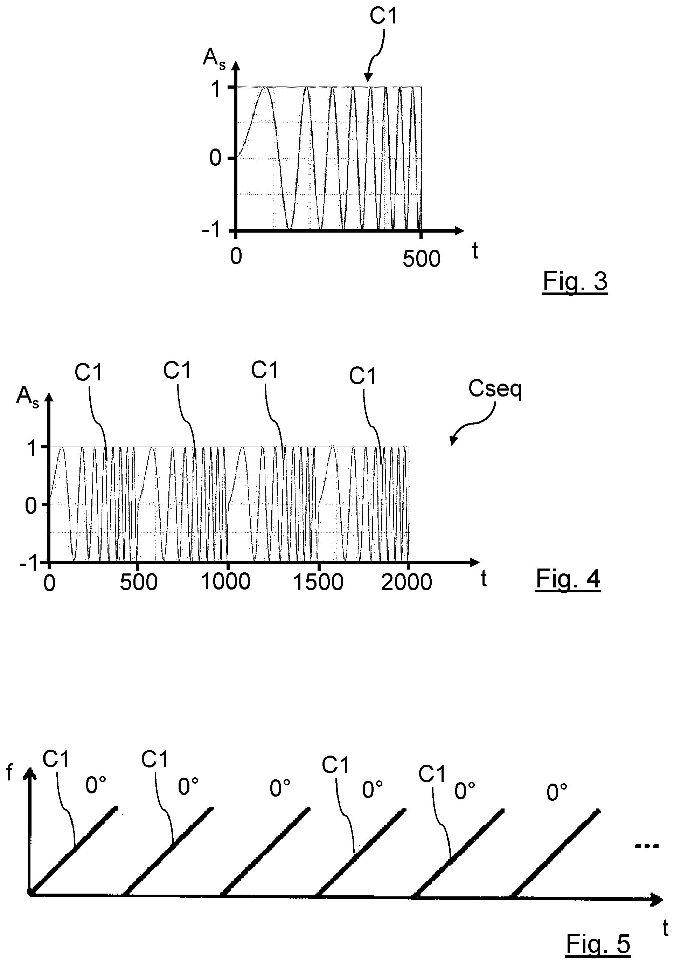

Die jeweiligen Senderantennen der Sender Tx1, Tx2, Tx3 und Tx4 sind beispielhaft identisch aufgebaut. Sie weisen identische Antennengewinne und Richtcharakteristiken auf. Mit den Sendern Tx1, Tx2, Tx3 und Tx4 können jeweilige Sendesignale C1, C2, C3 und C4 in Form von Chirps jeweils mit sich ständig ändernder Frequenz jeweils als Chirp-Sequenzen Cseq in den Überwachungsbereich 14 gesendet werden. Beispielhaft sind ein Sendesignal C1, welches mit dem ersten Sender Tx1 ausgesendet wird, in der Figur 3 und die entsprechende Chirp-Sequenz Cseq in der Figur 4 gezeigt. Die Sendesignale C1, C2, C3 und C4 werden an dem Objekt 18a reflektiert und als entsprechende Empfangssignale E1_a, E2_a, E3_a und E4_a zu den Empfängern Rx1 und Rx2 zurückgesendet. Außerdem werden die Sendesignale C1, C2, C3 und C4 an dem Objekt 18b reflektiert und als entsprechende Empfangssignale E1_b, E2_b, E3_b und E4_b zu den Empfängern Rx1 und Rx2 zurückgesendet. Mit den Empfängern Rx1 und Rx2 werden die Empfangssignale E1_a, E2_a, E3_a, E4_a, E1_b, E2_b, E3_b und E4_b in eine mit der Steuer-/Auswerteeinrichtung 22 verwertbare Form gebracht. Aus den Empfangssignalen E1_a, E2_a, E3_a, E4_a, E1_b, E2_b, E3_b und E4_b wird nach einem weiter unten beschriebenen Verfahren mit der Steuer- und Auswerteeinrichtung 22 jeweils die Entfernung, die Richtung und die Geschwindigkeit der Objekte 18a und 18b relativ zum Kraftfahrzeug 10 ermittelt.

Das Verfahren zur Ermittlung von Objektinformationen, nämlich die Entfernungen, die Richtungen und Geschwindigkeiten, von Objekten 18a und 18b , die mit dem Radarsystem 12 erfasst werden, wird im Folgenden anhand der Figuren 3 bis 7 beispielhaft erläutert.

Bei dem Verfahren werden mit der Steuer- und Auswerteeinrichtung 22 die Sender Tx1, Tx2, Tx3 und Tx4 so angesteuert, dass mit dem ersten Sender Tx1 eine Chirp-Sequenz Cseq aus ersten Sendesignalen C1, dem zweiten Sender Tx2 eine Chirp-Sequenz Cseq aus zweiten Sendesignalen C2, dem dritten Sender Tx3 eine Chirp-Sequenz Cseq aus dritten Sendesignalen C3 und dem vierten Sender Tx4 eine Chirp-Sequenz Cseq aus vierten Sendesignalen C4 in den Überwachungsbereich 14 gesendet werden. Dabei werden jeweiligen Chirps der Sendesignale C1, C2, C3 und C4 gleichzeitig im selben Takt gesendet.

Die Sendesignale C1, C2, C3 und C4 werden aus beispielhaft demselben frequenzmodulierten Dauerstrichsignal erzeugt. Das zweite Sendesignal C2, das dritte Sendesignal C3 und das vierte Sendesignal C4 werden mittels einer Phasenmodulation gegenüber dem ersten Sendesignal C1 so codiert, dass eine signaltechnische Orthogonalität zwischen dem ersten Sendesignal C1, dem zweiten Sendesignal C2, dem dritten Sendesignal C3 und dem dritten Sendesignal C4 erzielt wird.

In der Figur 3 ist beispielhaft das erste Sendesignal C1 in einem Amplituden-Zeit-Diagramm gezeigt. Die Amplitude $A_s$ ist dabei auf der Ordinatenachse und die Zeit t auf der Abszissenachse aufgetragen. Die Amplitude $A_s$ des ersten Sendesignals C1 ist beispielhaft auf 1 normiert.

Das Amplituden-Zeit-Diagramm aus der Figur 4 zeigt eine Chirp-Sequenz Cseq aus ersten Sendesignalen C1. Insgesamt können beispielhaft bei einer Messung 128 solcher ersten Sendesignale C1 als Chirp-Sequenz Cseq ausgesendet werden. Die Anzahl der Sendesignale C1 in einer Chirp-Sequenz Cseq gibt einen Eindeutigkeitsbereich an, der hier beispielhaft 128 beträgt. Die aufeinander folgenden ersten Sendesignale C1 einer Chirp-Sequenz Cseq haben jeweils die gleiche Phasenlage, sind also jeweils um einen Phasenverschiebungsbetrag P_Tx1 von 0° bezüglich ihrer Phase verschoben. Insgesamt werden also die ersten Sendesignale C1 getaktet nacheinander mit konstanter oder identischer Phase beziehungsweise Phasenlage ausgesendet.

In der Figur 5 ist ein Frequenz-Zeit-Diagramm für die Chirp-Sequenz Cseq des ersten Sendesignals C1 aus der Figur 4 gezeigt. Die Frequenz f ist auf der Ordinatenachse und die Zeit t auf der Abszissenachse aufgetragen. Die aufeinander folgenden ersten Sendesignale C1 sind hier jeweils als Frequenzrampen gezeigt, die jeweils um 0° bezüglich ihrer Phase verschoben sind.

Die Phasenlagen der zweiten Sendesignale C2 werden in der entsprechenden Chirp-Sequenz Cseq von einem Chirp zum nächsten jeweils um einen konstanten Phasenverschiebungsbetrag P_Tx2 inkrementiert. Die Phasenlagen der dritten Sendesignale C3 werden in der entsprechenden Chirp-Sequenz Cseq von einem Chirp zum nächsten jeweils um einen konstanten Phasenverschiebungsbetrag P_Tx3 inkrementiert. Die Phasenlagen der vierten Sendesignale C4 werden in der entsprechenden Chirp-Sequenz Cseq von einem Chirp zum nächsten jeweils um einen konstanten Phasenverschiebungsbetrag P_Tx4 inkrementiert. Die Phasenlagen der ersten Sendesignale C1 sind in der entsprechenden Chirp-Sequenz Cseq von einem Chirp zum nächsten konstant, sodass eine entsprechender Phasenverschiebungsbetrag P_Tx1 = 0 ist.

Die Phasenverschiebungsbeträge P_Tx2, P_Tx3 und P_Tx4 sind unterschiedlich und so vorgegeben, dass von allen Sendesignalen C1, C2, C3 und C4 die betragsmäßigen Differenzen Diff_P zwischen den jeweiligen Phasenverschiebungsbeträgen P_Tx1, P_Tx2, P_Tx3 und P_Tx4 von jeweils zwei der Sendesignale C1, C2, C3 und C4 unterschiedlich sind. Die jeweiligen betragsmäßigen Differenzen Diff_P zwischen P_Tx1 und P_Tx2, zwischen P_Tx1 und P_Tx3, zwischen P_Tx1 und P_Tx4, zwischen P_Tx2 und P_Tx3, zwischen P_Tx2 und P_Tx4 und zwischen P_Tx3 und P_Tx4 sind also unterschiedlich.

Die Phasenverschiebungsbeträge P_Tx1, P_Tx2, P_Tx3 und P_Tx4 werden als mathematisches Produkt eines Phasenverschiebungsgrundbetrags P0 einer jeweiligen Golomb-Zahl GR_Marks eines Golomb-Lineals mit der Ordnung GR_Order vorgegeben. Dabei wird ein Golomb-Lineal verwendet, dessen Ordnung GR_Order der Gesamtzahl N der Sender Tx1, Tx2, Tx3 und Tx4 entspricht. Bei dem vorliegenden Ausführungsbeispiel senden vier Sender simultan, sodass das Golomb-Lineal mit der Ordnung GR_Order = 4 verwendet wird. Die Golomb-Zahlen GR_Marks des verwenden Golomb-Lineals lauten 0, 1, 4 und 6.

Zur Vorgabe des Phasenverschiebungsgrundbetrags P0 kann beispielhaft der kleinstmögliche Schritt für eine Phasenverschiebung mit 360°/Q vorgegeben werden, wobei Q eine Zweierpotenz ist. Beispielhaft kann Q = 16 sein und der Phasenverschiebungsgrundbetrag P0 = 22,5° vorgegeben werden. Der Phasenverschiebungsgrundbetrag P0 kann auch in anderer Weise vorgegeben werden. Beispielsweise kann der Phasenverschiebungsgrundbetrag P0 so gewählt werden, dass der kleinste Phasenverschiebungsbetrag kleiner ist als der Eindeutigkeitsbereich für die Phasenverschiebung geteilt durch die Länge des verwendeten Golomb-Lineals. Die Länge des Golomb-Lineals ist der größte Abstand zwischen zwei Markierungen.

Allgemein gilt für die Berechnung der Phasenverschiebungsbeträge P_Tx aus dem Produkt der jeweiligen Golomb-Zahlen mit der Phasenverschiebungsgrundbetrag P0:

$$P\_Txn = GR\_Marks\_n * P0$$

Dabei ist n der Laufparameter für den entsprechenden Sender Tx. Für n gilt n = [1; N], wobei N die Gesamtzahl der simultan sendenden Sender Tx ist.

Bei dem konkreten Ausführungsbeispiel ist die Gesamtzahl der Sender N = 4. Der Phasenverschiebungsgrundbetrag wird als P0 = 22,5° vorgegeben.

Demnach ergibt sich für die Phasenverschiebungsbeträge P_Tx der vier Sender Tx1, Tx2, Tx3 und Tx4:

$$P\_Tx1 = 0 * 22{,}5° = 0°$$

$$P\_Tx2 = 1 * 22{,}5° = 22{,}5°$$

$$P\_Tx3 = 4 * 22{,}5° = 90°$$

$$P\_Tx4 = 6 * 22{,}5° = 135°$$

Für alle Differenzen Diff_P zwischen den Phasenverschiebungsbeträge P_Tx von jeweils zwei der Sender Tx1, Tx2, Tx3 und Tx4 ergeben sich wie folgt unterschiedliche Werte:

$$Diff\_P\,(2{,}1) = P\_Tx2 - P\_Tx1 = 22{,}5°$$

$$Diff\_P\,(3{,}1) = P\_Tx3 - P\_Tx1 = 90°$$

$$Diff\_P\,(4{,}1) = P\_Tx4 - P\_Tx1 = 135°$$

$$Diff\_P\,(3{,}2) = P\_Tx3 - P\_Tx2 = 67{,}5°$$

$$Diff\_P\,(4{,}2) = P\_Tx4 - P\_Tx2 = 112{,}5°$$

$$Diff\_P\,(4{,}3) = P\_Tx4 - P\_Tx3 = 45°$$

Für die jeweiligen Chirp-Sequenzen Cseq, die mit den vier Sendern Tx1, Tx2, Tx3 und Tx4 ausgesendet werden, ergibt sich demnach die folgende Phasenkonstellation, wobei "Tkt" den jeweiligen Takt der Chirp-Sequenzen Cseq bezeichnet und der besseren Übersichtlichkeit wegen beispielhaft lediglich 10 der Takte gezeigt sind:

|  | Tkt1 | Tkt2 | Tkt3 | Tkt4 | Tkt5 | Tkt6 | Tkt7 | Tkt8 | Tkt9 | Tkt10 | ... |
|---|---|---|---|---|---|---|---|---|---|---|---|
| Tx1 | 0° | 0° | 0° | 0° | 0° | 0° | 0° | 0° | 0° | 0° |  |
| Tx2 | 0° | 22,5° | 45° | 67,5° | 90° | 112,5° | 135° | 157,5° | 180° | 202,5° |  |
| Tx3 | 0° | 90° | 180° | 270° | 0° | 90° | 180° | 270° | 0° | 90° |  |
| Tx4 | 0° | 135° | 270° | 45° | 180° | 315° | 90° | 225° | 0° | 135° |  |

Dabei werden die Phasen der Sendesignale C1, C2, C3 und C4 mit jedem Takt um ihren jeweiligen Phasenverschiebungsbetrag P_Tx1, P_Tx2, P_Tx3 beziehungsweise P_Tx4 inkrementiert. Im ersten Takt Tkt1 starten die Sendesignale C1, C2, C3 und C4 jeweils mit einer Phase von 0°. Beispielsweise bei dem Sendesignal C2 des zweiten Senders Tx2 erhöht sich die Phase in den nachfolgenden Takten von Takt zu Takt, also von Chirp zu Chirp, jeweils um den Phasenverschiebungsbetrag P_Tx2, also um 22,5°.

Mit den Empfängern Rx1 und Rx2 werden die an dem Objekt 18a reflektierten Echos der Sendesignale C1, C2, C3 und C4 als Empfangssignale E1_a, E2_a, E3_a und E4_a und die an dem Objekt 18 b reflektierten Echos der Sendesignale C1, C2, C3 und C4 als Empfangssignale E1_b, E2_b, E3_b und E4_b empfangen und in eine mit der Steuer- und Auswerteeinrichtung 22 verwertbare Form gebracht.

Die Empfangssignale E1_a, E2_a, E3_a, E4_a, E1_b, E2_b, E3_b und E4_b werden mit entsprechenden Mitteln der Steuer-/Auswerteeinrichtung 22 einer einzigen zweidimensionalen schnellen Fourier-Transformation unterzogen.

Aus dem Ergebnis der zweidimensionalen diskreten Fourier-Transformation werden für jedes erfasste Objekt 18a und 18b vier den Sendesignalen C1, C2, C3 und C4 entsprechende Zielsignale, nämlich die Zielsignale ZS1_a, ZS2_a, ZS3_a, ZS4_a für das Objekt 18a und die Zielsignale ZS1_b, ZS2_b, ZS3_b, ZS4_b für das Objekt 18b, ermittelt. Die Anzahl der Zielsignale für ein Objekt entspricht der Gesamtzahl der Sender Tx1, Tx2, Tx3 und Tx4, hier also vier. In dieser Phase des Verfahrens sind die beispielhaft acht Zielsignale noch nicht den jeweiligen Sendern Tx1, Tx2, Tx3 und Tx4 zugeordnet, werden aber dennoch der besseren Verständlichkeit wegen bereits hier mit den jeweiligen Bezugszeichen ZS1_a, ZS2_a, ZS3_a, ZS4_a, ZS1_b, ZS2_b, ZS3_b, ZS4_b bezeichnet. Die Zuordnung der Zielsignale ZS1_a, ZS2_a, ZS3_a, ZS4_a, ZS1_b, ZS2_b, ZS3_b, ZS4_b, also deren Validierung, erfolgt erst in einer späteren Phase des Verfahrens.

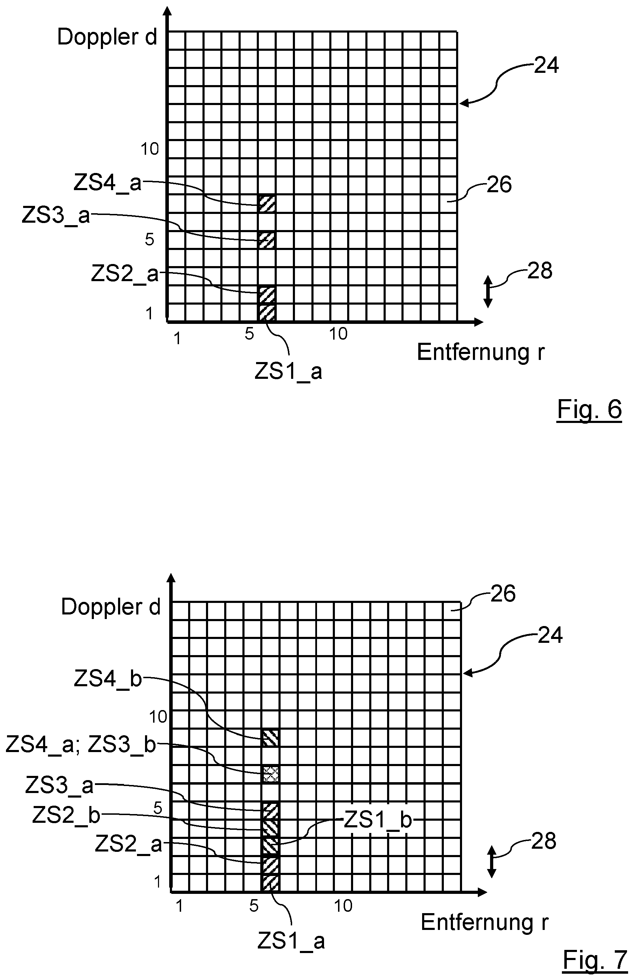

In der Figur 6 sind beispielhaft die Zielsignale ZS1_a, ZS2_a, ZS3_a, ZS4_a der besseren Übersichtlichkeit wegen lediglich für das Objekt 18a in einer Entfernungs-Doppler-Matrix 24 jeweils mit Schraffuren nach rechts oben angedeutet. In der Figur 7 sind zusätzlich die Zielsignale ZS1_b, ZS2_b, ZS3_b, ZS4_b für das Objekt 18b jeweils mit Schraffuren nach rechts unten angedeutet. Wie weiter unten noch erläutert wird, fallen das Zielsignal ZS4_a für das Objekt 18a und das Zielsignal ZS3_b für das Objekt 18b in dieselbe Entfernungs-Doppler-Zelle 26 der Entfernungs-Doppler-Matrix 24, welche daher mit einer Kreuzschraffur versehen ist. Bei dem beschriebenen Ausführungsbeispiel führt das Objekt 18a beispielhaft keine Relativbewegung bezüglich dem Radarsystem 12 aus. Das Objekt 18 b führt eine Relativbewegung bezüglich dem Radarsystem 12 aus. Außerdem befinden sich bei dem beschriebenen Ausführungsbeispiel Objektziele der Objekte 18a und 18b, an denen die Sendesignale C1, C2, C3 und C4 reflektiert werden, in der gleichen Entfernung zum Radarsystem 12. Objektziele im Sinne der Erfindung sind Bereiche von Objekten in dem Überwachungsbereich, an denen Sendesignale so reflektiert werden, dass die entsprechenden Echos als Empfangssignale von dem Radarsystem 12 erfasst werden können.

Die in den Figuren 6 und 7 gezeigte Entfernungs-Doppler-Matrix 24 kann auch als Range-Doppler-Matrix bezeichnet werden. Die Entfernungs-Doppler-Matrix 24 setzt sich aus einer Vielzahl von Entfernungs-Doppler-Zellen 26 zusammen. Jede Entfernungs-Doppler-Zelle 26 wird durch einen Entfernungswert r, auch Range Bin genannt, und einen Dopplerwert d, auch Doppler bin genannt, charakterisiert. In den Figuren 6 und 7 sind beispielhaft die Entfernungswerte r auf der Abszissenachse und die Dopplerwerte d auf der Ordinatenachse aufgetragen.

Im vorliegenden Ausführungsbeispiel entspricht der Eindeutigkeitsbereich in der Dopplerdimension der Anzahl der Sendesignale einer Chirp-Sequenz Cseq und entspricht, wie bereits oben erwähnt, 128 Entfernungs-Doppler-Zellen 26 in der Entfernungs-Doppler-Matrix 24. In den Figuren 6 und 7 der besseren Übersichtlichkeit wegen lediglich einige der Entfernungs-Doppler-Zellen 26 beispielhaft in Form eines Rasters angedeutet.

Da sich die Objektziele der Objekte 18a und 18b in der gleichen Entfernung zu dem Radarsystem 12 befinden, weisen alle Zielsignale ZS1_a, ZS2_a, ZS3_a, ZS4_a, ZS1_b, ZS2_b, ZS3_b, ZS4_b denselben Entfernungswert r, beispielhaft r=6, auf.

Als Folge der weiter oben beschriebenen erfindungsgemäßen Phasenkonstellation für die Sendesignale C1, C2, C3 und C4 sind die Abstände 28 in der Dopplerdimension, also die Differenz zwischen den jeweiligen Dopplerwerten d, jeweils zwischen benachbarten Zielsignalen ZS1_a zu ZS2_a, ZS2_a zu ZS3_a und ZS3_a zu ZS4_a, welche von dem Objekt 18a herrühren, wie in den Figuren 6 und 7 gezeigt, unterschiedlich.

Das Zielsignal ZS1_a hat beispielhaft die Entfernungs-Doppler-Koordinaten (6, 1). Das Zielsignal ZS2_a hat beispielhaft die Entfernungs-Doppler-Koordinaten (6, 2). Das Zielsignal ZS3_a hat beispielhaft die Entfernungs-Doppler-Koordinaten (6, 5). Das Zielsignal ZS4_a hat beispielhaft die Entfernungs-Doppler-Koordinaten (6, 7). Der Abstand 28 in der Dopplerdimension zwischen den Zielsignalen ZS1_a und ZS2_a beträgt also 1. Der Abstand 28 zwischen Zielsignalen ZS2_a zu ZS3_a beträgt also 3. Der Abstand 28 zwischen Zielsignalen ZS3_a zu ZS4_a beträgt also 2.

Ebenfalls als Folge der weiter oben beschriebenen erfindungsgemäßen Phasenkonstellation für die Sendesignale C1, C2, C3 und C4 sind die Abstände 28 in der Dopplerdimension, also die Differenzen zwischen den jeweiligen Dopplerwerten d, jeweils zwischen den benachbarten Zielsignalen ZS1_b und ZS2_b und benachbarten Zielsignalen ZS3_b und ZS4_b, welche von dem Objekt 18b herrühren, wie in der Figur 7 gezeigt, unterschiedlich. Das Zielsignal ZS1_b hat beispielhaft die Entfernungs-Doppler-Koordinaten (6, 3). Das Zielsignal ZS2_b hat beispielhaft die Entfernungs-Doppler-Koordinaten (6, 4). Das Zielsignal ZS3_b hat beispielhaft die Entfernungs-Doppler-Koordinaten (6, 7). Das Zielsignal ZS4_b hat beispielhaft die Entfernungs-Doppler-Koordinaten (6, 9). Demnach ist der Abstand 28 in der Dopplerdimension zwischen den Zielsignalen ZS1_b und ZS2_b gleich 1. Der Abstand 28 zwischen den Zielsignalen ZS3_b und ZS4_b beträgt 2. Der Abstand 28 zwischen den benachbarten Zielsignalen ZS2_b und ZS3_b beträgt 3.

Durch die erfindungsgemäße Phasenkonstellation für die Sendesignale C1, C2, C3 und C4 wird erreicht, dass die Zielsignale ZS1_a, ZS2_a und ZS4_a, welche vom Objekt 18a herrühren, und die Zielsignale ZS1_b, ZS2_b und ZS4_b, welche vom Objekt 18b herrühren, jeweils in unterschiedlichen Entfernungs-Doppler-Zellen 26 liegen und daher voneinander unterschieden werden können. Lediglich das Zielsignal ZS4_a vom Objekt 18a und das Zielsignal ZS3_b vom Objekt 18b liegen bei dem Ausführungsbeispiel in derselben Entfernungs-Doppler-Zelle 26 mit den Entfernungs-Doppler-Koordinaten (6, 5).

Um die Zielsignale ZS1_a, ZS2_a, ZS3_a, ZS4_a, ZS1_b, ZS2_b, ZS3_b, ZS4_b zu validieren, müssen diese den jeweiligen Sendesignalen C1, C2, C3 und C4, also den jeweiligen Sendern Tx1, Tx2, Tx3 beziehungsweise Tx4, zugeordnet werden.

Zur Zuordnung der Zielsignale ZS1_a, ZS2_a, ZS3_a, ZS4_a, ZS1_b, ZS2_b, ZS3_b, ZS4_b zu den jeweiligen Sendesignalen C1, C2, C3 und C4 wird für jede Entfernungs-Doppler-Zelle 26 aus der Entfernungs-Dopplermatrix 24 ein jeweiliges Leistungsfenster PW ermittelt. Aus den Leistungsfenstern PW wird eine in den Figuren nicht gezeigte Leistungsfenster-Matrix ermittelt. Aus der Leistungsfenster-Matrix werden Leistungsfenster-Zielsignale ermittelt, welche den Zielsignalen ZS1_a, ZS2_a, ZS3_a, ZS4_a, ZS1_b, ZS2_b, ZS3_b, ZS4_b aus der Entfernungs-Doppler-Matrix 24 entsprechen.

Die Leistungsfenster PW werden für jede Entfernungs-Doppler-Zelle 26 nach folgender Formel ermittelt:

$$PW[r][d] = \sum_{m=0}^{GR\_Order-1} SPEC(r)[mod(GR\_Marks[m] \; + d, D)]$$

Dabei ist GR_Marks die Golomb-Zahl des verwendeten Golomb-Lineals mit der Ordnung GR_Order, im folgenden Ausführungsbeispiel also 4. Der Parameter für die Entfernungswerte der Entfernungs-Doppler-Zellen 26 ist der Entfernungswert r aus dem Bereich [0; R], wobei R die Anzahl der Entfernungs-Doppler-Zellen 26 der Entfernungs-Doppler-Matrix 24 in der Entfernungsdimension ist. D ist die Anzahl der Entfernungs-Doppler-Zellen 26 der Entfernungs-Doppler-Matrix 24 in der Dopplerdimension. Der Parameter für die Entfernungs-Doppler-Zellen 26 in der Dopplerdimension ist der Dopplerwert d aus dem Bereich [0; D].

Mit den folgenden Gleichungen werden die korrekten komplexen Werte aus der ursprünglichen zweidimensionalen Fourier-Transformation, nämlich der Entfernungs-Doppler-Matrix 24, den entsprechenden Sendern Tx1, Tx2, Tx3 und Tx4 zugewiesen:

$$2D\text{-}FFT_{TX1} = 2D\text{-}FFT\ [D_m + GR\_Marks[0]]$$

$$2D\text{-}FFT_{TX2} = 2D\text{-}FFT\ [D_m + GR\_Marks[1]]$$

...

$$2D\text{-}FFT_{TXN} = 2D\text{-}FFT\ [D_m + GR\_Marks[N\text{-}1]]$$

Dabei ist N die Anzahl der Sender, bei dem gezeigten Ausführungsbeispiel also 4. TX1 bis TXN, nämlich Tx1 bis Tx4, sind die Bezeichnungen für die Sender. $R_m$ ist der Index für die die Entfernungswerte der Entfernungs-Doppler-Zellen für ein erfasstes Ziel in der Leistungsmatrix. $D_m$ ist der Index für die Dopplerwerte der Entfernungs-Doppler-Zellen für ein erfasstes Ziel in der Leistungsmatrix.

Optional kann eine zusätzliche Überprüfung in einer Entfernungszelle $R_m$ durchgeführt werden, wenn es andere benachbarte Detektionen zu der Dopplerzelle $D_m$ gibt, die in der Entfernungs-Doppler-Matrix 24 kollidierende Peaks haben. Für die Suche können die Detektionen in Dopplerzellen im Bereich [mod($D_m$+GR_length, D), mod($D_m$-GR_length, D)] überprüft werden. Falls eine Detektion in diesem Bereich vorliegt, kann eine weitere Überprüfung durchgeführt werden, um mögliche Kollisionen in der Entfernungs-Doppler-Matrix 24 zu finden. Diese kollidierenden Dopplerzellen können markiert werden und diese Information kann für die MIMO-Signalverarbeitung genutzt werden.

Da die Zielsignale ZS1_a, ZS2_a, ZS3_a, ZS4_a, ZS1_b, ZS2_b, ZS3_b, ZS4_b in der Entfernungs-Doppler-Matrix 24 denselben Entfernungswert haben, kann aus ihnen jeweils die korrekte Entfernung abgeleitet werden.

Da das erste Sendesignal C1 nicht codiert und in seiner Phase verschoben ist, kann der dem ersten Zielsignal ZS1_a zugehörige Dopplerwert d als der korrekte Dopplerwert betrachtet werden und daraus die korrekte Relativgeschwindigkeit des Objektes 18a abgeleitet werden. Entsprechend kann aus dem Dopplerwert d des ersten Zielsignals ZS1_b die korrekte Relativgeschwindigkeit des Objektes 18b abgeleitet werden.

Nach einer geeigneten Korrektur bezüglich der Phasenkonstellation der Sendesignale C1, C2, C3 und C4 kann auch aus den anderen eindeutigen und validierten Zielsignalen ZS2_a, ZS3_a und ZS2_b, ZS4_b jeweils die korrekte Relativgeschwindigkeit abgeleitet werden. Die Zielsignale ZS4_a und ZS3_b fallen in die gleiche Entfernungs-Doppler-Zelle 26 und können daher den Sendesignalen C1, C2, C3 und C4 und den Objekten 18a und 18b nicht eindeutig zugeordnet und validiert werden.

Die Phasenwerte, welche zu den eindeutigen und validierten Zielsignalen ZS1_a, ZS2_a, ZS3_a, ZS1_b, ZS2_b, ZS4_b gehören, und die Phasenwerte, welche zu den Sendesignalen C1, C2, C3 und C4 gehören, können aufgrund der Verschiebung unabhängig voneinander bestimmt werden und für eine phasenbasierte Winkelmessung des Azimut und der Elevation der Objekte 18a und 18b bezüglich des Radarsystems 12 genutzt werden.

Aus den validierten Zielsignalen ZS1_a, ZS2_a, ZS3_a, ZS1_b, ZS2_b, ZS4_b wird so die jeweilige Relativgeschwindigkeit, der jeweilige Abstand und jeweilige Richtung und damit die Position der Objekte 18a und 18b bezüglich des Radarsystems 12 als Objektinformationen ermittelt.

Das Verfahren wird zyklisch durchgeführt, sodass der Überwachungsbereich 14 kontinuierlich auf Objekte 18a und 18b hin überwacht und entsprechende erfasste Objekte 18a und 18b verfolgt werden können.

Die Erfindung kann auch bei Radarsystemen 12 mit mehr oder weniger als vier Sendern Tx1, Tx2, Tx3 und Tx4, beispielsweise 12 oder mehr Sendern, und/oder mehr oder weniger als zwei Empfängern Rx1 und Rx2 und entsprechenden Sendesignalen C1, C2, C3 und C4 beziehungsweise Empfangssignalen E1, E2, E3 und E4 eingesetzt werden.

**Patentansprüche**

1. Verfahren zur Ermittlung von wenigstens einer Objektinformation wenigstens eines Objektes (18a, 18b), das mit einem Radarsystem (12) erfasst wird, bei dem

   - mit wenigstens vier Sendern (Tx1, Tx2, Tx3, Tx4) Sendesignale (C1, C2, C3, C4) in Form von Chirps jeweils in Chirp-Sequenzen (Cseq) in einen Überwachungsbereich (14) des Radarsystems (12) gesendet werden,
   - mit wenigstens einem Empfänger (Rx1, Rx2) an dem wenigstens einen Objekt (18a, 18b) reflektierte Echos der Sendesignale (C1, C2, C3, C4) als Empfangssignale (E1_a, E2_a, E3_a, E4_a, E1_b, E2_b, E3_b, E4_b) empfangen und sofern erforderlich in eine für eine elektronische Steuer- und/oder Auswerteeinrichtung (22) verwertbare Form gebracht werden,
   - die Empfangssignale (E1_a, E2_a, E3_a, E4_a, E1_b, E2_b, E3_b, E4_b) wenigstens einer zweidimensionalen diskreten Fourier-Transformation unterzogen werden,
   - aus dem Ergebnis der wenigstens einen zweidimensionalen diskreten Fourier-Transformation wenigstens ein Zielsignal (ZS1_a, ZS2_a, ZS3_a, ZS4_a, ZS1_b, ZS2_b, ZS3_b, ZS4_b) ermittelt wird,
   - aus dem wenigstens einen Zielsignal (ZS1_a, ZS2_a, ZS3_a, ZS4_a, ZS1_b, ZS2_b, ZS3_b, ZS4_b) wenigstens eine Objektinformation ermittelt wird,
   - wobei auf der Senderseite aus einem frequenzmodulierten Dauerstrichsignal wenigstens ein erstes Sendesignal (C1) und wenigstens drei andere Sendesignale (C2, C3, C4) erzeugt und jeweils mit einem eigenen Sender (Tx1, Tx2, Tx3, Tx4) gleichzeitig in den Überwachungsbereich (14) des Radarsystems (12) gesendet werden,
   - wobei die wenigstens drei anderen Sendesignale (C2, C3, C4) jeweils mittels einer Phasenmodulation gegenüber dem wenigstens einen ersten Sendesignal (C1) codiert werden,
   - wobei die jeweilige Phasenlagen der wenigstens drei anderen Sendesignale (C2, C3, C4) von einem Chirp zum nächsten jeweils um einen jeweiligen konstanten Phasenverschiebungsbetrag inkrementiert oder dekrementiert werden,
   - wobei für die wenigstens drei anderen Sendesignale (C2, C3, C4) unterschiedliche Phasenverschiebungsbeträge verwendet werden,

   **dadurch gekennzeichnet, dass**
   die jeweiligen Phasenverschiebungsbeträge für die wenigstens drei anderen Sendesignale (C2, C3, C4) so vorgegeben werden, dass für wenigstens vier der Sendesignale (C1, C2, C3, C4) inklusive des wenigstens einen ersten Sendesignals (C1) die betragsmäßigen Differenzen zwischen den Phasenverschiebungsbeträgen von jeweils zwei der wenigstens vier Sendesignale (C1, C2, C3, C4) unterschiedlich sind.

2. Verfahren nach Anspruch 1, **dadurch gekennzeichnet, dass** die Phasenlage des wenigstens einen ersten Sendesignals (C1) von einem Chirp zum nächsten konstant gehalten wird und ein entsprechender Phasenverschiebungsbetrag gleich null verwendet wird.

3. Verfahren nach Anspruch 1 oder 2, **dadurch gekennzeichnet, dass** die wenigstens drei anderen Sendesignale (C2, C3, C4) so codiert werden, dass von allen Sendesignalen (C1, C2, C3, C4) inklusive des wenigstens einen ersten Sendesignals (C1) die betragsmäßigen Differenzen zwischen den Phasenverschiebungsbeträgen von jeweils zwei der wenigstens vier Sendesignale (C1, C2, C3, C4) unterschiedlich sind.

4. Verfahren nach einem der vorigen Ansprüche, **dadurch gekennzeichnet, dass** die Phasenverschiebungsbeträge der Sendesignale (C1, C2, C3, C4) so vorgegeben werden, dass es unter den Phasenverschiebungsbeträgen keine zwei Phasenverschiebungsbeträge gibt, bei denen die betragsmäßige Differenz der betragsmäßigen Differenz wenigstens eines der zwei Phasenverschiebungsbeträge zu einem Phasenverschiebungsbetrag eines anderen Sendesignals (C1, C2, C3, C4) entspricht.

5. Verfahren nach einem der vorigen Ansprüche, **dadurch gekennzeichnet, dass** ein Phasenverschiebungsbetrag wenigstens eines der wenigstens drei anderen Sendesignale (C2, C3, C4) als mathematisches Produkt eines Phasenverschiebungsgrundbetrags mit einer dem besagten Sendesignal (C2, C3, C4) zugeordneten Golomb-Zahl eines Golomb-Lineals vorgegeben wird.

6. Verfahren nach Anspruch 5, **dadurch gekennzeichnet, dass** das Golomb-Lineal verwendet wird, dessen Ordnung kleiner oder gleich ist der Anzahl der Sendesignale (C1, C2, C3, C4) inklusive des wenigstens einen ersten Sendesignals (C1), welchen unterschiedliche Phasenverschiebungsbeträge zugeordnet werden sollen.

7. Verfahren nach einem der vorigen Ansprüche, **dadurch gekennzeichnet, dass** auf der Empfängerseite aus dem Ergebnis der wenigstens einen zweidimensionalen diskreten Fourier-Transformation eine Mehrzahl von Zielsignalen (ZS1_a, ZS2_a, ZS3_a, ZS4_a, ZS1_b, ZS2_b, ZS3_b, ZS4_b) in einer Entfernungs-Doppler-Matrix (24) ermittelt wird.

8. Verfahren nach Anspruch 7, **dadurch gekennzeichnet, dass** auf der Empfängerseite für jede Entfernungs-Doppler-Zelle (26) aus der Entfernungs-Doppler-Matrix (24) ein jeweiliges Leistungsfenster ermittelt wird, aus den Leistungsfenstern eine Leistungsfenster-Matrix ermittelt wird und mithilfe der Leistungsfenster-Matrix eine Mehrzahl von Zielsignalen (ZS1_a, ZS2_a, ZS3_a, ZS4_a, ZS1_b, ZS2_b, ZS3_b, ZS4_b) jeweiligen Sendesignalen (C1, C2, C3, C4) zuordnet wird.

9. Verfahren nach einem der vorigen Ansprüche, **dadurch gekennzeichnet, dass** aus wenigstens einem Zielsignal (ZS1_a, ZS2_a, ZS3_a, ZS4_a, ZS1_b, ZS2_b, ZS3_b, ZS4_b) wenigstens eine Objektinformation ermittelt wird.

10. Verfahren nach einem der vorigen Ansprüche, **dadurch gekennzeichnet, dass** aus wenigstens einem Zielsignal (ZS1_a, ZS2_a, ZS3_a, ZS4_a, ZS1_b, ZS2_b, ZS3_b, ZS4_b) wenigstens eine Objektinformation in Form einer Geschwindigkeit und/oder einer Position, insbesondere ein Abstand und/oder eine Richtung, des wenigstens einen Objektes (18a, 18b) relativ zu dem Radarsystem (12) ermittelt werden.

11. Verfahren nach einem der vorigen Ansprüche, **dadurch gekennzeichnet, dass** eine einzige zweidimensionale diskrete Fourier-Transformation, insbesondere eine einzige zweidimensionale schnelle Fourier-Transformation, ausgeführt werden.

12. Verfahren nach einem der vorigen Ansprüche, **dadurch gekennzeichnet, dass** die wenigstens drei anderen Sendesignale ( C2, C3, C4) auf der Senderseite mittels einer binären oder höherstufigen Phasenumtastung codiert werden.

13. Verfahren nach einem der vorigen Ansprüche, **dadurch gekennzeichnet, dass** das Verfahren mehrmals hintereinander, insbesondere zyklisch, durchgeführt werden.

14. Radarsystem (12) zur Ermittlung von wenigstens einer Objektinformation wenigstens eines Objektes (18a, 18b),

- mit wenigstens vier Sendern (Tx1, Tx2, Tx3, Tx4) zum Senden von Sendesignalen (C1, C2, C3, C4) in Form von Chirps in Chirp-Sequenzen (Cseq) in einen Überwachungsbereich (14),
- mit wenigstens einem Empfänger (Rx1, Rx2) zum Empfangen von an dem wenigstens einen Objekt (18a, 18b) reflektierten Echos der Sendesignale (C1, C2, C3, C4) als Empfangssignale (E1_a, E2_a, E3_a, E4_a, E1_b, E2_b, E3_b, E4_b) und
- mit wenigstens einer Steuer- und/oder Auswerteeinrichtung (22) zur Steuerung der wenigstens vier Sender (Tx1, Tx2, Tx3, Tx4) und des wenigstens einen Empfängers (Rx1, Rx2) und zur Auswertung der Empfangssignale (E1_a, E2_a, E3_a, E4_a, E1_b, E2_b, E3_b, E4_b),

**dadurch gekennzeichnet, dass**
die wenigstens eine Steuer- und/oder Auswerteeinrichtung (22) Mittel aufweist zur Durchführung des Verfahrens nach einem der vorigen Ansprüche.

## Claims

1. Method for determining at least one piece of object information about at least one object (18a, 18b) sensed with a radar system (12), in which

   - transmission signals (C1, C2, C3, C4) in the form of chirps are each transmitted in chirp sequences (Cseq) into a monitoring region (14) of the radar system (12) with at least four transmitters (Tx1, Tx2, Tx3, Tx4),
   - echoes, which are reflected at the at least one object (18a, 18b), of the transmission signals (C1, C2, C3, C4) are received as received signals (E1_a, E2_a, E3_a, E4_a, E1_b, E2_b, E3_b, E4_b) with at least one receiver (Rx1, Rx2), and if necessary are converted into a form which can be used by an electronic control and/or evaluation device (22),
   - the received signals (E1_a, E2_a, E3_a, E4_a, E1_b, E2_b, E3_b, E4_b) are subjected to at least one two-dimensional discrete Fourier transformation,
   - from the result of the at least one two-dimensional discrete Fourier transformation, at least one target signal (ZS1_a, ZS2_a, ZS3_a, ZS4_a, ZS1_b, ZS2_b, ZS3_b, ZS4_b) is determined,
   - from the at least one target signal (ZS1_a, ZS2_a, ZS3_a, ZS4_a, ZS1_b, ZS2_b, ZS3_b, ZS4_b) at least one piece of object information is determined,
   - wherein at the transmitter end at least one first transmission signal (C1) and at least three other transmission signals (C2, C3, C4) are generated from a frequency-modulated continuous wave signal and each is transmitted simultaneously into the monitoring region (14) of the radar system (12) with a separate transmitter (Tx1, Tx2, Tx3, Tx4),
   - wherein the at least three other transmission signals (C2, C3, C4) are each encoded by means of a phase modulation with respect to the at least one first transmission signal (C1),
   - wherein the respective phase positions of the at least three other transmission signals (C2, C3, C4) are each incremented or decremented by a constant phase shift amount from one chirp to the next,
   - wherein different phase shift amounts are used for the at least three other transmission signals (C2, C3, C4),

   **characterized in that**
   the respective phase shift amounts for the at least three other transmission signals (C2, C3, C4) are specified in such a way that for at least four of the transmission signals (C1, C2, C3, C4), including the at least one first transmission signal (C1), the absolute differences between the phase shift amounts of any two of the at least four transmission signals (C1, C2, C3, C4) are different.

2. Method according to Claim 1, **characterized in that** the phase position of the at least one first transmission signal (C1) is held constant from one chirp to the next and a corresponding phase shift amount equal to zero is used.

3. Method according to Claim 1 or 2, **characterized in that** the at least three other transmission signals (C2, C3, C4) are encoded in such a way that of all transmission signals (C1, C2, C3, C4), including the at least one first transmission signal (C1), the absolute differences between the phase shift amounts of any two of the at least four transmission signals (C1, C2, C3, C4) are different.

4. Method according to any of the previous claims, **characterized in that** the phase shift amounts of the transmission signals (C1, C2, C3, C4) are specified in such a way that there are no two phase shift amounts among the phase shift amounts for which the absolute difference equals the absolute difference of at least one of the two phase shift amounts for a phase shift amount of another transmission signal (C1, C2, C3, C4).

5. Method according to any of the previous claims, **characterized in that** a phase shift amount of at least one of the at least three other transmission signals (C2, C3, C4) is defined as the mathematical product of a phase shift basic amount and a Golomb number of a Golomb ruler assigned to said transmission signal (C2, C3, C4).

6. Method according to Claim 5, **characterized in that** the Golomb ruler is used, the order of which is less than or equal to the number of transmission signals (C1, C2, C3, C4), including the at least one first transmission signal (C1), to which different phase shift amounts are to be assigned.

7. Method according to any of the previous claims, **characterized in that** at the receiver end, from the result of the at least one two-dimensional discrete Fourier transformation, a plurality of target signals (ZS1_a, ZS2_a, ZS3_a, ZS4_a, ZS1_b, ZS2_b, ZS3_b, ZS4_b) is determined in a range Doppler matrix (24).

8. Method according to claim 7, **characterized in that** at the receiver end, a respective power window is determined for each range Doppler cell (26) from the range Doppler matrix (24), a power window matrix is determined from the power windows and the power window matrix is used to assign a plurality of target signals (ZS1_a, ZS2_a, ZS3_a, ZS4_a, ZS1_b, ZS2_b, ZS3_b, ZS4_b) to respective transmission signals (C1, C2, C3, C4).

9. Method according to any of the previous claims, **characterized in that** from at least one target signal (ZS1_a, ZS2_a, ZS3_a, ZS4_a, ZS1_b, ZS2_b, ZS3_b, ZS4_b) at least one piece of object information is determined.

10. Method according to any of the previous claims, **characterized in that** from at least one target signal (ZS1_a, ZS2_a, ZS3_a, ZS4_a, ZS1_b, ZS2_b, ZS3_b, ZS4_b) at least one piece of object information is determined in the form of a speed and/or a position, in particular a distance and/or a direction, of the at least one object (18a, 18b) relative to the radar system (12).

11. Method according to any of the previous claims, **characterized in that** a single two-dimensional discrete Fourier transformation, in particular a single two-dimensional fast Fourier transformation, is performed.

12. Method according to any of the previous claims, **characterized in that** the at least three other transmission signals (C2, C3, C4) are encoded at the transmitter end by means of binary or higher-order phase-shift keying.

13. Method according to any of the previous claims, **characterized in that** the method is carried out multiple times in succession, in particular cyclically.

14. Radar system (12) for determining at least one piece of object information about at least one object (18a, 18b),

- having at least four transmitters (Tx1, Tx2, Tx3, Tx4) for transmitting transmission signals (C1, C2, C3, C4) in the form of chirps in chirp sequences (Cseq) into a monitoring region (14),
- having at least one receiver (Rx1, Rx2) for receiving echoes, which are reflected at the at least one object (18a, 18b), of the transmission signals (C1, C2, C3, C4) as received signals (E1_a, E2_a, E3_a, E4_a, E1_b, E2_b, E3_b, E4_b) and
- having at least one control and/or evaluation device (22) for controlling the at least four transmitters (Tx1, Tx2, Tx3, Tx4) and the at least one receiver (Rx1, Rx2) and for evaluating the received signals (E1_a, E2_a, E3_a, E4_a, E1_b, E2_b, E3_b, E4_b),

**characterized in that**
the at least one control and/or evaluation device (22) has means for carrying out the method according to one of the previous claims.

## Revendications

1. Procédé servant à déterminer au moins un élément d'informations d'objet concernant au moins un objet (18a, 18b) qui est détecté au moyen d'un système radar (12), selon lequel

- des signaux d'émission (C1, C2, C3, C4) sous forme de signaux à fluctuation de longueur d'onde sont émis au moyen d'au moins quatre émetteurs (Tx1, Tx2, Tx3, Tx4), respectivement dans des séquences de fluctuation de longueur d'onde (Cseq), dans une zone de surveillance (14) du système radar (12),
- les échos des signaux d'émission (C1, C2, C3, C4) réfléchis par ledit au moins un objet (18a, 18b) sont reçus en tant que signaux de réception (E1_a, E2_a, E3_a, E4_a, E1_b, E2_b, E3_b, E4_b) au moyen d'au moins un récepteur (Rx1, Rx2) et sont mis, si nécessaire, sous une forme exploitable pour un dispositif de commande et/ou d'évaluation électronique (22),
- les signaux de réception (E1_a, E2_a, E3_a, E4_a, E1_b, E2_b, E3_b, E4_b) sont soumis à au moins une transformée de Fourier discrète bidimensionnelle,
- au moins un signal cible (ZS1_a, ZS2_a, ZS3_a, ZS4_a, ZS1_b, ZS2_b, ZS3_b, ZS4_b) est déterminé à partir du résultat de ladite au moins une transformée de Fourier discrète bidimensionnelle,
- au moins un élément d'informations d'objet est déterminé à partir dudit au moins un signal cible (ZS1_a, ZS2_a, ZS3_a, ZS4_a, ZS1_b, ZS2_b, ZS3_b, ZS4_b),
- sur le côté émetteur, au moins un premier signal d'émission (C1) et au moins trois autres signaux d'émission (C2, C3, C4) sont générés à partir d'un signal à onde continue modulé en fréquence et émis simultanément dans la zone de surveillance (14) du système radar (12), respectivement au moyen d'un émetteur séparé (Tx1, Tx2, Tx3, Tx4),
- lesdits au moins trois autres signaux d'émission (C2, C3, C4) étant respectivement codés au moyen d'une modulation de phase par rapport audit au moins un premier signal d'émission (C1),
- les positions de phase respectives desdits au moins trois autres signaux d'émission (C2, C3, C4) sont respectivement incrémentées ou décrémentées d'un signal à fluctuation de longueur d'onde au suivant selon une quantité de déphasage respective constante,
- des quantités de déphasage différentes sont utilisées pour lesdits au moins trois autres signaux d'émission (C2, C3, C4),

**caractérisé en ce que**
les quantités de déphasage respectives pour lesdits au moins trois autres signaux d'émission (C2, C3, C4) sont spécifiées de telle sorte que, pour au moins quatre des signaux d'émission (C1, C2, C3, C4), y compris ledit au moins un premier signal d'émission (C1), les différences de quantité entre les quantités de déphasage de deux respectifs desdits au moins quatre signaux d'émission (C1, C2, C3, C4) sont différentes.

2. Procédé selon la revendication 1, **caractérisé en ce que** la position de phase dudit au moins un premier signal d'émission (C1) est maintenue constante d'un signal à fluctuation de longueur d'onde au suivant et **en ce qu'**une quantité de déphasage correspondante égale à zéro est utilisée.

3. Procédé selon la revendication 1 ou 2, **caractérisé en ce que** lesdits au moins trois autres signaux d'émission (C2, C3, C4) sont codés de telle sorte que, parmi tous les signaux d'émission (C1, C2, C3, C4), y compris ledit au moins un premier signal d'émission (C1), les différences de quantité entre les quantités de déphasage de deux respectifs desdits au moins quatre signaux d'émission (C1, C2, C3, C4) sont différentes.

4. Procédé selon l'une quelconque des revendications précédentes, **caractérisé en ce que** les quantités de déphasage des signaux d'émission (C1, C2, C3, C4) sont spécifiées de telle sorte qu'il n'existe pas, parmi les quantités de déphasage, deux quantités de déphasage pour lesquelles la différence de quantité correspond à la différence de quantité d'au moins l'une des deux quantités de déphasage par rapport à une quantité de déphasage d'un autre signal d'émission (C1, C2, C3, C4).

5. Procédé selon l'une quelconque des revendications précédentes, **caractérisé en ce qu'**une quantité de déphasage d'au moins l'un desdits au moins trois autres signaux d'émission (C2, C3, C4) est spécifiée comme étant le produit mathématique d'une quantité de déphasage de base par un nombre de Golomb d'une règle de Golomb, associé audit signal d'émission (C2, C3, C4).

6. Procédé selon la revendication 5, **caractérisé en ce que** la règle de Golomb utilisée est une règle dont l'ordre est inférieur ou égal au nombre des signaux d'émission (C1, C2, C3, C4), y compris ledit au moins un premier signal d'émission (C1), auxquels doivent être associées des quantités de déphasage différentes.

7. Procédé selon l'une quelconque des revendications précédentes, **caractérisé en ce que**, sur le côté récepteur, une pluralité de signaux cibles (ZS1_a, ZS2_a, ZS3_a, ZS4_a, ZS1_b, ZS2_b, ZS3_b, ZS4_b) est déterminée dans une matrice distance-Doppler (24) à partir du résultat de ladite au moins une transformée de Fourier discrète bidimensionnelle.

8. Procédé selon la revendication 7, **caractérisé en ce que**, sur le côté récepteur, une fenêtre de puissance respective est déterminée pour chaque cellule distance-Doppler (26) à partir de la matrice distance-Doppler (24), **en ce qu'**une matrice de fenêtres de puissance est déterminée à partir des fenêtres de puissance et **en ce qu'**une pluralité de signaux cibles (ZS1_a, ZS2_a, ZS3_a, ZS4_a, ZS1_b, ZS2_b, ZS3_b, ZS4_b) est associée à des signaux d'émission respectifs (C1, C2, C3, C4) à l'aide de la matrice de fenêtres de puissance

**9.** Procédé selon l'une quelconque des revendications précédentes, **caractérisé en ce qu'**au moins un élément d'informations d'objet est déterminé à partir d'au moins un signal cible (ZS1_a, ZS2_a, ZS3_a, ZS4_a, ZS1_b, ZS2_b, ZS3_b, ZS4_b).

**10.** Procédé selon l'une quelconque des revendications précédentes, **caractérisé en ce qu'**au moins un élément d'informations d'objet est déterminé à partir d'au moins un signal cible (ZS1_a, ZS2_a, ZS3_a, ZS4_a, ZS1_b, ZS2_b, ZS3_b, ZS4_b) sous la forme d'une vitesse et/ou d'une position, notamment une distance et/ou une direction, dudit au moins un objet (18a, 18b) par rapport au système radar (12).

**11.** Procédé selon l'une quelconque des revendications précédentes, **caractérisé en ce qu'**une unique transformée de Fourier discrète bidimensionnelle, notamment une unique transformée de Fourier rapide bidimensionnelle, est exécutée.

**12.** Procédé selon l'une quelconque des revendications précédentes, **caractérisé en ce que** lesdits au moins trois autres signaux d'émission (C2, C3, C4) sont codés sur le côté émetteur au moyen d'un codage par déplacement de phase binaire ou d'ordre supérieur.

**13.** Procédé selon l'une quelconque des revendications précédentes, **caractérisé en ce que** le procédé est mis en œuvre plusieurs fois consécutivement, notamment de manière cyclique.

**14.** Système radar (12) destiné à déterminer au moins un élément d'informations d'objet concernant au moins un objet (18a, 18b),

- comprenant au moins quatre émetteurs (Tx1, Tx2, Tx3, Tx4) destinés à émettre des signaux d'émission (C1, C2, C3, C4) sous forme de signaux à fluctuation de longueur d'onde dans des séquences de fluctuation de longueur d'onde (Cseq) dans une zone de surveillance (14),
- comprenant au moins un récepteur (Rx1, Rx2) destiné à recevoir des échos des signaux d'émission (C1, C2, C3, C4) réfléchis par ledit au moins un objet (18a, 18b) en tant que signaux de réception (E1_a, E2_a, E3_a, E4_a, E1_b, E2_b, E3_b, E4_b), et
- comprenant au moins un dispositif de commande et/ou d'évaluation (22) destiné à commander lesdits au moins quatre émetteurs (Tx1, Tx2, Tx3, Tx4) et ledit au moins un récepteur (Rx1, Rx2) et à évaluer les signaux de réception (E1_a, E2_a, E3_a, E4_a, E1_b, E2_b, E3_b, E4_b),

**caractérisé en ce que**
ledit au moins un dispositif de commande et/ou d'évaluation (22) comprend des moyens destinés à mettre en œuvre le procédé selon l'une quelconque des revendications précédentes.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018137836 A